# EUROPÄISCHE PATENTSCHRIFT

(11) **EP 3 910 968 B1**
(45) Veröffentlichungstag und Bekanntmachung des Hinweises auf die Patenterteilung: **19.07.2023**
(21) Anmeldenummer: 21173118.7
(22) Anmeldetag: 10.05.2021
(51) Int. Cl.: H04W 4/02, H04W 4/70

(54) **VERFAHREN ZUM ORTEN EINES NETZWERKGERÄTS IN EINEM MESH-NETZWERK UND ENTSPRECHENDES MESH-NETZWERK**
METHOD FOR LOCATING A NETWORK DEVICE IN A MESH NETWORK AND CORRESPONDING MESH NETWORK
PROCÉDÉ DE LOCALISATION D'UN APPAREIL DE RÉSEAU DANS UN RÉSEAU MAILLÉ ET RÉSEAU MAILLÉ CORRESPONDANT

(30) Priorität: 15.05.2020 DE 102020113236
(43) Veröffentlichungstag der Anmeldung: 17.11.2021
(73) Patentinhaber: Krohne Messtechnik GmbH, 47058 Duisburg (DE)
(72) Erfinder: Zhang, Junshu, 40880 Ratingen (DE)
(74) Vertreter: Gesthuysen Patentanwälte

(56) Entgegenhaltungen:
- KR-A- 20100 073 947
- US-A1- 2008 002 599
- JO CHANWOONG ET AL: "Multilateration method based on the variance of estimated distance in range-free localisation", ELECTRONICS LETTERS, IEE STEVENAGE, GB, Bd. 52, Nr. 12, 9. Juni 2016 (2016-06-09), Seiten 1078-1080, XP006073120, ISSN: 0013-5194, DOI: 10.1049/EL.2016.0226
- HANASHI A M ET AL: "Performance evaluation of dynamic probabilistic flooding under different mobility models in MANETs", PARALLEL AND DISTRIBUTED SYSTEMS, 2007 INTERNATIONAL CONFERENCE ON, IEEE, PISCATAWAY, NJ, USA, 5. Dezember 2007 (2007-12-05), Seiten 1-6, XP031573092, ISBN: 978-1-4244-1889-3
- LIM H ET AL: "Flooding in wireless ad hoc networks", COMPUTER COMMUNICATIONS, ELSEVIER SCIENCE PUBLISHERS BV, AMSTERDAM, NL, Bd. 24, Nr. 3-4, 15. Februar 2001 (2001-02-15), Seiten 353-363, XP004248987, ISSN: 0140-3664, DOI: 10.1016/S0140-3664(00)00233-4

## Beschreibung

Die Erfindung betrifft zum einen ein Verfahren zum Orten eines Netzwerkgeräts in einem Mesh-Netzwerk. Dabei wird das Mesh-Netzwerk durch das Netzwerkgerät und mindestens ein weiteres Netzwerkgerät gebildet.

Zum anderen betrifft die Erfindung ein Mesh-Netzwerk mit einem Netzwerkgerät und mindestens einem weiteren Netzwerkgerät.

Dokument KR 2010 0073947 A offenbart das Bestimmen eines Abstands zu einem Netzwerkgerät durch das Zählen von Schrittwerten.

In einem Mesh-Netzwerk ist jedes Netzwerkgerät mit mindestens einem anderen Netzwerkgerät verbunden. Eine Nachricht von einem Netzwerkgerät, welche an ein anderes Netzwerkgerät adressiert ist, wird über jeweils unmittelbar miteinander verbundene Netzwerkwerkgeräte weitergeleitet, bis sie das adressierte Netzwerkgerät erreicht hat. Das Weiterleiten einer Nachricht durch ein Netzwerkgerät umfasst das Empfangen der Nachricht von einem unmittelbar verbundenen Netzwerkgerät und das darauffolgende Senden der Nachricht in das Mesh-Netzwerk, in welchem sie von Netzwerkgeräten empfangen wird, die unmittelbar verbunden sind. Ein Mesh-Netzwerk, bei welchem jedes Netzwerkgerät mit jedem anderen Netzwerkgerät verbunden ist, wird als vollständiges Mesh-Netzwerk bezeichnet.

Demnach breitet sich eine Nachricht in einem Mesh-Netzwerk in Ausbreitungsschritten von einem Netzwerkgerät zu einem adressierten Netzwerkgerät aus. Wenn zum Beispiel eine Nachricht von einem ersten Netzwerkgerät an ein unmittelbar mit diesem verbundenes zweites Netzwerkgerät adressiert ist, benötigt die Nachricht vom ersten Netzwerkgerät zum zweiten Netzwerkgerät mindestens einen Ausbreitungsschritt. Wenn zum Beispiel eine Nachricht von einem ersten Netzwerkgerät an ein zweites Netzwerkgerät adressiert ist, welches über zumindest ein drittes Netzwerkgerät zu erreichen ist, benötigt die Nachricht vom ersten Netzwerkgerät zum zweiten Netzwerkgerät mindestens zwei Ausbreitungsschritte.

Oftmals weisen Mesh-Netzwerke eine Vielzahl an Netzwerkgeräten, zum Beispiel zehn oder mehr, auf, die häufig räumlich derart angeordnet sind, dass für einen Benutzer nicht alle Netzwerkgeräte von einer Position aus sichtbar sind. Das ist oftmals bei Mesh-Netzwerken in industriellen Anlagen der Fall.

In der Praxis treten für einen Benutzer eines Mesh-Netzwerks Probleme auf.

Ein Problem ist, dass der Benutzer auf ein Problem bei einem Netzwerkgerät aufmerksam gemacht werden soll, welches von seiner Position aus nicht sichtbar ist. Das Problem ist zum Beispiel ein Fehler, den das Netzwerkgerät erkannt hat. Ein anderes Problem ist, dem Benutzer die Ortung das Netzwerkgerät im Mesh-Netzwerk zu ermöglichen oder jedenfalls zu erleichtern.

Somit ist eine Aufgabe der vorliegenden Erfindung, ein Verfahren zum Orten eines Netzwerkgeräts in einem Mesh-Netzwerk anzugeben.

Die Aufgabe ist durch ein Verfahren mit den Merkmalen von Patentanspruch 1 gelöst.

Bei dem erfindungsgemäßen Verfahren führt das Netzwerkgerät die folgenden Verfahrensschritte aus:
- Erzeugen einer Nachricht.
- Speichern eines Schrittwerts und eines Anfangsschrittwerts in der Nachricht.
- Initialisieren des Schrittwerts mit dem Anfangsschrittwert.
- Anschließendes Senden der Nachricht in das Mesh-Netzwerk.

Weiter führt das mindestens eine weitere Netzwerkgerät die folgenden Verfahrensschritte aus.
- Empfangen der Nachricht.
- Bestimmen, ob die Nachricht als zum ersten Mal empfangen eingestuft wird.

Nur wenn die Nachricht von dem mindestens einen weiteren Netzwerkgerät als zum ersten Mal empfangen eingestuft wird, führt das mindestens eine weitere Netzwerkgerät die folgenden Verfahrensschritte aus:
- Addieren eines Deltaschrittwerts zum Schrittwert.
- Bestimmen eines Abstands aus dem derart veränderten Schrittwert und dem Anfangsschrittwert des mindestens einen weiteren Netzwerkgeräts von dem Netzwerkgerät.
- Anzeigen des Abstands zur Ortung des Netzwerkgeräts für einen Benutzer an dem mindestens einen weiteren Netzwerkgerät.

Demnach wird zunächst die Nachricht erzeugt und werden dann in dieser der Schrittwert und der Anfangsschrittwert abgespeichert. Darüber hinaus sind für gewöhnlich in der Nachricht auch weitere Information und/oder Daten abspeicherbar. Das Initialisieren des Schrittwerts mit dem Anfangsschrittwert bedeutet, dass dem Schrittwert der Anfangsschrittwert zugewiesen wird. Der Anfangsschrittwert ist zum Beispiel zuvor im Netzwerkgerät abgespeichert und diesem vorgegeben worden. Zum Beispiel wird dem Schrittwert in der Nachricht beim Speichern zunächst kein Wert zugewiesen, sondern erst beim Initialisieren mit dem Anfangsschrittwert.

Das mindestens eine weitere Netzwerkgerät empfängt die zuvor vom Netzwerkgerät gesendete Nachricht. Dazu wird die Nachricht vom Netzwerkgerät zu dem mindestens einen weiteren Netzwerkgerät übertragen. Zur Übertragung der Nachricht sind das Netzwerkgerät und das mindestens eine weitere Netzwerkgerät für gewöhnlich unmittelbar miteinander verbunden. Bei einer unmittelbaren Verbindung ist zwischen dem Netzwerkgerät und dem mindestens einen weiteren Netzwerkgerät kein weiteres Netzwerkgerät angeordnet.

Nach dem Empfangen wird von dem mindestens einen weiteren Netzwerkgerät zunächst bestimmt, ob die Nachricht als zum ersten Mal von dem mindestens einen weiteren Netzwerkgerät empfangen eingestuft wird. Nur wenn das der Fall ist, werden die folgenden Verfahrensschritte von dem mindestens einen weiteren Netzwerkgerät ausgeführt:
Zunächst wird der Deltaschrittwert zum Schrittwert addiert. Der Deltaschrittwert ist zum Beispiel zuvor im mindestens einen weiteren Netzwerkgerät abgespeichert und diesem vorgegeben worden.

Dann wird der Abstand aus dem derart veränderten Schrittwert und dem Anfangsschrittwert bestimmt. Der Abstand wird zum Beispiel aus der Differenz von Schrittwert und Anfangsschrittwert bestimmt und beträgt hier einen Delta schrittwert.

Weiter wird der Abstand dann zur Ortung des Netzwerkgeräts für einen Benutzer an dem mindestens einen weiteren Netzwerkgerät angezeigt.

Durch die Anzeige des Abstands an dem mindestens einen weiteren Netzwerkgerät wird der Benutzer zum Netzwerkgerät geführt, und zwar auch dann, wenn das Netzwerkgerät räumlich derart angeordnet ist, dass es für den Benutzer von seiner Position aus nicht sichtbar ist. Nur das mindestens eine weitere Netzwerkgerät muss für den Benutzer sichtbar sein. Damit einher geht auch eine Aufmerksammachung des Benutzers.

In einer Ausgestaltung des Verfahrens ist in einem weiteren Verfahrensschritt vorgesehen, dass von dem mindesten einen weiteren Netzwerkgerät in der Nachricht der Schrittwert durch den veränderten Schrittwert ersetzt und die Nachricht dann erneut in das Mesh-Netzwerk gesendet wird. Dieser Verfahrensschritt wird nur dann ausgeführt, wenn von dem mindestens einen weiteren Netzwerkgerät die Nachricht als zum ersten Mal empfangen eingestuft wird.

Wenn das Mesh-Netzwerk neben dem Netzwerkgerät und dem mindestens einen weiteren Netzwerkgerät noch ein weiteres Netzwerkgerät aufweist und dieses unmittelbar mit dem mindestens einen weiteren Netzwerkgerät verbunden ist, dann wird die Nachricht mit dem veränderten Schrittwert von dem weiteren Netzwerkgerät empfangen. Das Netzwerkgerät und das weitere Netzwerkgerät sind mittelbar verbunden, da zwischen diesen das mindestens eine weitere Netzwerkgerät angeordnet ist. Die Nachricht wird von dem mindestens einen weiteren Netzwerkgerät somit weitergeleitet.

Das weitere Netzwerkgerät führt dann die Verfahrensschritte aus, die auch das mindestens eine weitere Netzwerkgerät ausführt. Der Abstand des weiteren Netzwerkgeräts vom Netzwerkgerät beträgt zwei Deltaschrittwerte. Der Abstand von einem weiteren Netzwerkgerät zum Netzwerkgerät beträgt immer ein Vielfaches des Deltaschrittwerts. Das weitere Netzwerkgerät und das Netzwerkgerät sind zum Beispiel nicht nur über das mindestens eine weitere Netzwerkgerät miteinander mittelbar verbunden, sondern parallel dazu auch über zwei weitere Netzwerkgeräte. Über diesen Pfad beträgt der Abstand dann drei Deltaschrittwerte. Vorzugsweise wird unter Abstand hier jedoch der minimale Abstand verstanden.

Die Vorteilhaftigkeit des Verfahrens nimmt demnach mit der Anzahl der weiteren Netzwerkgeräte zu, da damit auch die Anzahl der Netzwerkgeräte zunimmt, die den Benutzer zum Netzwerkgerät führen.

In einer weiteren Ausgestaltung des Verfahrens ist vorgesehen, dass bestimmt wird, ob von dem mindestens einen weiteren Netzwerkgerät eine Nachricht als zum ersten Mal empfangen eingestuft wird, indem von dem mindestens einen weiteren Netzwerkgerät jede empfangene Nachricht mit einem individuellen Index versehen und dieser abgespeichert wird, der Index der Nachricht mit den bereits abgespeicherten Indizes verglichen wird und die Nachricht, nur wenn ihr Index verschieden von den bereits abgespeicherten Indizes ist, als zum ersten Mal empfangen eingestuft wird. Das Abspeichern der Indizes erfolgt vorzugsweise in dem mindestens einen weiteren Netzwerkgerät. Demnach wird nicht die vollständige Nachricht, sondern nur ein sie eindeutig identifizierender Index abgespeichert.

In einer zur vorstehenden Ausgestaltung alternativen Ausgestaltung des Verfahrens ist vorgesehen, dass bestimmt wird, ob von dem mindestens einen weiteren Netzwerkgerät eine Nachricht als zum ersten Mal empfangen eingestuft wird, indem von dem mindestens einen weiteren Netzwerkgerät empfangene Nachrichten abgespeichert werden, die Nachricht mit den bereits abgespeicherten Nachrichten verglichen wird und die Nachricht, nur wenn sie verschieden von den bereits abgespeicherten Nachrichten ist, als zum ersten Mal empfangen eingestuft wird.

In einer weiteren Ausgestaltung des Verfahrens ist vorgesehen, dass der Deltaschrittwert den Betrag 1 hat, vorzugsweise den Wert 1 hat und vorzugsweise der Anfangswert den Wert 0 hat. Wenn der Anfangswert den Wert 0 hat, dann bietet es sich an, keinen Anfangswert in der Nachricht abzuspeichern und den Schrittwert mit 0 zu initialisieren, wodurch sich die Bestimmung des Abstands vereinfacht, da der Abstand dem veränderten Schrittwert entspricht.

In einer weiteren Ausgestaltung des Verfahrens ist vorgesehen, dass zunächst von dem mindestens einen weiteren Netzwerkgerät bestimmt wird, ob der Schrittwert einen Endschrittwert erreicht hat. Nur wenn der Schrittwert den Endschrittwert noch nicht erreicht hat, wird von dem mindestens einen weiteren Netzwerkgerät die Nachricht erneut in das Mesh-Netzwerk gesendet. Dabei wird vorzugsweise von dem Netzwerkgerät der Endschrittwert in der Nachricht gespeichert. Demnach müssen in dieser Ausgestaltung zwei Bedingungen erfüllt sein, damit die Nachricht erneut in das Mesh-Netzwerk gesendet wird. Zum einen muss die Nachricht von dem mindestens einen weiteren Netzwerkgerät als zum ersten Mal empfangen eingestuft werden. Zum anderen darf der Schrittwert den Endschrittwert noch nicht erreicht haben.

In einer weiteren Ausgestaltung ist vorgesehen, dass zum einen von dem Netzwerkgerät in der Nachricht eine Kennung des mindestens einen weiteren Netzwerkgeräts abgespeichert wird. Die Kennung wird ebenfalls vom mindestens einen weiteren Netzwerkgerät abgespeichert. Damit ist auch gemeint, dass die Kennung im mindestens einen weiteren Netzwerkgerät abgespeichert wird. Das ist dann die eigene Kennung. Weiter wird zum anderen von dem mindestens einen weiteren Netzwerkgerät zunächst bestimmt, ob die Kennung in der Nachricht mit der eigenen Kennung identisch ist. Wenn die Kennung in der Nachricht nicht mit der eigenen Kennung identisch ist, wird von dem mindestens einen weiteren Netzwerkgerät die Nachricht als nicht zum ersten Mal empfangen eingestuft.

In einer Weiterbildung der vorstehenden Ausgestaltung ist vorgesehen, dass, nur wenn die Kennung in der Nachricht mit der eigenen Kennung identisch ist, von dem mindestens einen weiteren Netzwerkgerät die Nachricht erneut in das Mesh-Netzwerk gesendet wird. Wenn die vor dieser weitergebildeten Ausgestaltung beschriebene Ausgestaltung außen vor gelassen wird, dann müssen hier zwei Bedingungen erfüllt sein, damit die Nachricht erneut in das Mesh-Netzwerk gesendet wird. Zum einen muss die Nachricht von dem mindestens einen weiteren Netzwerkgerät als zum ersten Mal empfangen eingestuft werden. Zum anderen muss die Kennung in der Nachricht mit der eigenen Kennung identisch sein. Wenn die vorstehende Ausgestaltung nicht außen vor gelassen wird, kommt als dritte Bedingung hinzu, dass der Schrittwert den Endschrittwert noch nicht erreicht haben darf.

Vorzugsweise weisen mehrere Netzwerkgeräte die gleiche Kennung auf. Dadurch werden diese Netzwerkgeräte zu einer Netzwerkgruppe zusammengefasst und die Nachricht breitet sich nur in dieser Netzwerkgruppe aus. Die Kennung ist zum Beispiel eine Adresse oder ein Teil einer übergeordneten Adresse.

Eine weitere Ausgestaltung setzt voraus, dass das mindestens eine weitere Netzwerkgerät eine Blinkleuchte aufweist und zum Blinken der Blinkleuchte ausgebildet ist. Vorzugsweise ist die Blinkleuchte eine LED. In dieser Ausgestaltung ist nun vorgesehen, dass der Abstand angezeigt wird, indem von dem mindestens einen weiteren Netzwerkgerät die Blinkleuchte mit einer Anzahl geblinkt wird, die mit dem Abstand korrespondiert. Bei dieser Ausgestaltung bietet sich ein Wert des Deltaschrittwerts von 1 an, sodass die Blinkleuchte den Abstand in ganzzahligen Schritten anzeigt. Vorzugsweise wird die Anzeige des Abstands wiederholt.

In einer weiteren Ausgestaltung ist vorgesehen, dass von dem Netzwerkgerät in der Nachricht eine Fehlermeldung abgespeichert wird. Weiter wird vorzugsweise von dem mindestens einen weiteren Netzwerkgerät bestimmt, ob in der Nachricht eine Fehlermeldung abgespeichert ist, und, nur wenn eine Fehlermeldung in der Nachricht abgespeichert ist, wird von dem mindestens einen weiteren Netzwerkgerät der Abstand angezeigt. Der Abstand wird also nur dann angezeigt, wenn eine Fehlermeldung in der Nachricht abgespeichert ist. Die Fehlermeldung enthält vorzugsweise Informationen über einen vom Netzwerkgerät erkannten Fehler. Vorzugsweise zeigt das mindestens eine weitere Netzwerkgerät nicht nur den Abstand für den Benutzer an, sondern auch die Fehlermeldung.

In einer weiteren Ausgestaltung ist vorgesehen, dass von dem mindestens einen weiteren Netzwerkgerät die folgenden Verfahrensschritte ausgeführt werden.
- Starten eines Zeitmessers, wenn die Nachricht empfangen wird.
- Zurücksetzen und neu starten des Zeitmessers, falls eine weitere vom Netzwerkgerät gesendete Nachricht empfangen wird.
- Durchführen eines Vergleichs eines Zeitwerts des Zeitmessers mit einem Referenzzeitwert.
- Einstufen der Nachricht als zum ersten Mal empfangen, wenn der Vergleich einen Zeitwert größer als den Referenzzeitwert ergibt.

Diese Ausgestaltung ermöglicht die Detektion eines Ausfalls des Netzwerkgeräts. Sie setzt voraus, dass von dem Netzwerkgerät die Nachricht und danach diese oder auch andere Nachrichten regelmäßig in einem Zeitabstand in das Mesh-Netzwerk gesendet wird bzw. werden, was bei einem Ausfall des Netzwerks dann nicht mehr der Fall ist. Der Referenzzeitwert wird zumindest so groß gewählt wie der Zeitabstand. Vorzugsweise wird der Referenzzeitwert größer als der Zeitabstand gewählt, sodass eine falsche Detektion des Ausfalls aufgrund einer geringfügig längeren Laufzeit einer Nachricht als üblich vermieden wird.

Eine weitere Aufgabe der Erfindung ist die Angabe eines Mesh-Netzwerks, welches das Orten eines Netzwerkgeräts in dem Mesh-Netzwerk ermöglicht.

Die Aufgabe ist durch ein Mesh-Netzwerk mit den Merkmalen von Patentanspruch 12 gelöst.

Bei dem erfindungsgemäßen Mesh-Netzwerk ist das Netzwerkgerät ausgebildet
- eine Nachricht zu erzeugen,
- in der Nachricht einen Schrittwert und einen Anfangsschrittwert zu speichern,
- den Schrittwert mit dem Anfangsschrittwert zu initialisieren und
- die Nachricht dann in das Mesh-Netzwerk zu senden.

Das mindestens eine weitere Netzwerkgerät ist ausgebildet,
- die Nachricht zu empfangen und
- zu bestimmen, ob die Nachricht als zum ersten Mal empfangen eingestuft ist.

Das mindestens eine weitere Netzwerkgerät ist ausgebildet, nur wenn die Nachricht von dem mindestens einen weiteren Netzwerkgerät als zum ersten Mal empfangen eingestuft ist,
- zum Schrittwert einen Deltaschrittwert zu addieren,
- aus dem derart veränderten Schrittwert und dem Anfangsschrittwert einen Abstand des mindestens einen weiteren Netzwerkgeräts von dem Netzwerkgerät zu bestimmen und
- den Abstand zur Ortung des Netzwerkgeräts für einen Benutzer an dem mindestens einen weiteren Netzwerkgerät anzuzeigen.

Die Ausbildung des mindestens einen weiteren Netzwerkgeräts zur Bestimmung, ob die Nachricht als zum ersten Mal empfangen eingestuft ist, bedeutet, dass es ausgebildet ist, die Nachricht entsprechend einzustufen.

In einer Ausgestaltung des Mesh-Netzwerks ist vorgesehen, dass das Netzwerkgerät zusätzlich wie das mindestens eine weitere Netzwerkgerät und/oder das mindestens eine weitere Netzwerkgerät zusätzlich wie das Netzwerkgerät ausgebildet ist.

In einer weiteren Ausgestaltung ist vorgesehen, dass die Netzwerkgeräte als Feldgeräte ausgebildet sind.

In einer weiteren Ausgestaltung ist vorgesehen, dass das Netzwerkgerät und/oder das mindestens eine weitere Netzwerkgerät ausgebildet sind bzw. ist, das zuvor beschriebene Verfahren auszuführen.

Die Ausführungen zum Verfahren gelten entsprechend für das Mesh-Netzwerk und umgekehrt.

Im Einzelnen ist eine Vielzahl von Möglichkeiten gegeben, das Verfahren und das Mesh-Netzwerk auszugestalten und weiterzubilden. Dazu wird verwiesen sowohl auf die den Patentansprüchen 1 und 12 nachgeordneten Patentansprüche als auch auf die nachfolgende Beschreibung eines bevorzugten Ausführungsbeispiels in Verbindung mit der Zeichnung. In der Zeichnung zeigt
- Fig. 1: ein Mesh-Netzwerk mit einem Netzwerkgerät und sieben weiteren Netzwerkgeräten,
- Fig. 2: das Mesh-Netzwerk nach einem ersten Ausbreitungsschritt,
- Fig. 3: das Mesh-Netzwerk nach einem zweiten Ausbreitungsschritt und
- Fig. 4: das Mesh-Netzwerk nach einem dritten Ausbreitungsschritt.

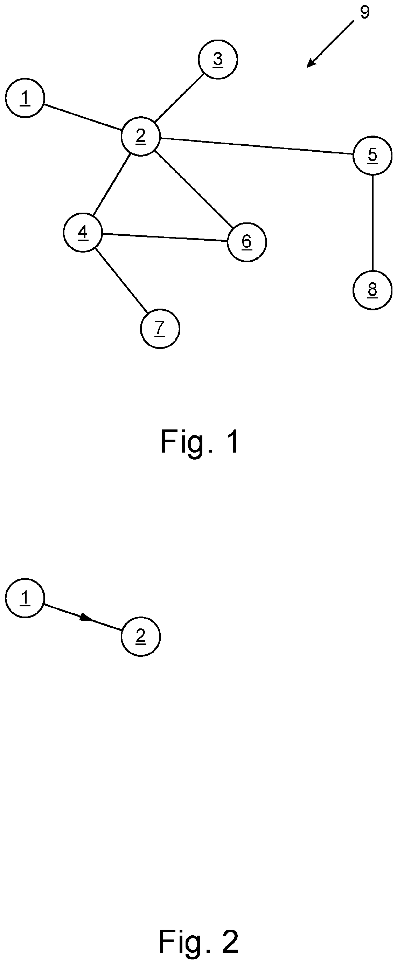

Fig. 1 zeigt eine räumliche Anordnung von einem Netzwerkgerät 1 und sieben weiteren Netzwerkgeräten 2 bis 8, die ein Mesh-Netzwerk 9 bilden. Die weiteren Netzwerkgeräte 2 bis 8 weisen die gleiche Kennung auf, wobei die Kennung in jedem der weiteren Netzwerkgeräte 2 bis 8 abgespeichert wird. Weiter weisen die weiteren Netzwerkgeräte 2 bis 8 jeweils eine LED auf und sind jeweils zum Blinken der LED ausgebildet.

Eine Linie zwischen jeweils zwei der Netzwerkgeräte 1 bis 8 stellt eine unmittelbare Verbindung zwischen diesen dar, über welche Nachrichten übertragen werden. In dem Mesh-Netzwerk 9 ist jedes der Netzwerkgeräte 1 bis 8 mindestens mit einem der anderen Netzwerkgeräte 1 bis 8 unmittelbar verbunden. Das Mesh-Netzwerk 9 ist kein vollständiges Mesh-Netzwerk.

Eine Nachricht von einem der Netzwerkgeräte 1 bis 8, welche an ein anderes der Netzwerkgeräte 1 bis 8 adressiert ist, wird über jeweils unmittelbar miteinander verbundene Netzwerkwerkgeräte 1 bis 8 weitergeleitet, bis sie das adressierte Netzwerkgerät 1 bis 8 erreicht hat. Das Weiterleiten einer Nachricht durch jedes der Netzwerkgeräte 1 bis 8 umfasst das Empfangen der Nachricht von einem unmittelbar verbundenen Netzwerkgerät 1 bis 8 und das darauffolgende Senden der Nachricht in das Mesh-Netzwerk 9, in welchem die Nachricht von den unmittelbar verbundenen Netzwerkgeräte 1 bis 8 empfangen wird. Eine Nachricht in dem Mesh-Netzwerk 9 breitet sich somit in einem oder mehreren Ausbreitungsschritten von einem der Netzwerkgeräte 1 bis 8 zu dem Netzwerkgerät 1 bis 8 aus, an welche die Nachricht adressiert ist.

Nachfolgend wird als Beispiel eine Nachricht vom Netzwerkgerät 1 erzeugt, welche an die weiteren Netzwerkgeräte 2 bis 8 adressiert ist, und in das Mesh-Netzwerk 9 gesendet.

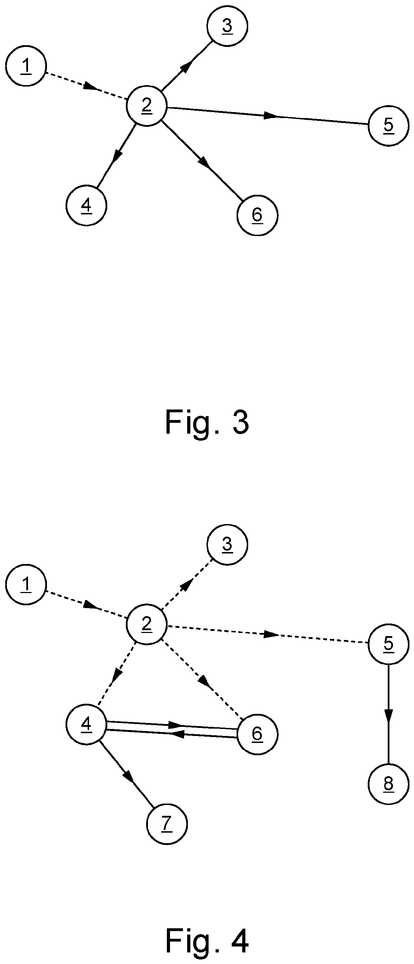

Der erste Ausbreitungsschritt ist in Fig. 2, der zweite Ausbreitungsschritt in Fig. 3 und der dritte Ausbreitungsschritt in Fig. 4 jeweils durch einen Pfeil bzw. mehrere Pfeile dargestellt. Die Teile des Mesh-Netzwerks 9, in denen sich die Nachricht noch nicht ausgebreitet hat, sind in den Fig. 2 bis 4 nicht dargestellt. Der dem in Fig. 3 dargestellten Ausbreitungsschritt vorangehende Ausbreitungsschritt ist durch eine Strichlinie dargestellt. Die dem in Fig. 4 dargestellten Ausbreitungsschritt vorangehenden Ausbreitungsschritte sind ebenfalls als Strichlinien dargestellt.

Im ersten Ausbreitungsschritt, siehe Fig. 2, führt das Netzwerkgerät 1 die folgenden Verfahrensschritte aus:
- Erzeugen der Nachricht.
- Speichern eines Schrittwerts, eines Anfangsschrittwerts mit dem Wert 0 und der Kennung der weiteren Netzwerkgeräte 2 bis 8 in der Nachricht.
- Initialisieren des Schrittwerts mit dem Anfangsschrittwert, wodurch der Schrittwert den Wert 0 erhält.
- Anschließendes Senden der Nachricht in das Mesh-Netzwerk 9.

Das erste weitere Netzwerkgerät 2 führt im ersten Ausbreitungsschritt die folgenden Verfahrensschritte aus:
- Empfangen der Nachricht.
- Bestimmen, ob die Nachricht als zum ersten Mal empfangen eingestuft wird, indem von dem ersten weiteren Netzwerkgerät 2 jede empfangene Nachricht mit einem individuellen Index versehen und dieser abgespeichert wird, der Index der Nachricht mit den bereits abgespeicherten Indizes verglichen wird und die Nachricht, nur wenn ihr Index verschieden von den bereits abgespeicherten Indizes ist, als zum ersten Mal empfangen eingestuft wird. Vorliegend ist das der Fall.
- Bestimmen, ob die Kennung in der Nachricht mit der eigenen Kennung identisch ist. Vorliegend ist das der Fall.

Da die Nachricht von dem ersten weiteren Netzwerkgerät 2 als zum ersten Mal empfangen eingestuft und auch die Kennung in der Nachricht mit der eigenen Kennung identisch ist, werden von dem ersten weiteren Netzwerkgerät 2 zusätzlich die folgenden Schritte im ersten Ausbreitungsschritt ausgeführt:
- Addieren eines Deltaschrittwerts zum Schrittwert, wobei der Deltaschrittwert einen Wert von 1 hat. Somit hat der Schrittwert den Wert 1.
- Bestimmen eines Abstands aus dem derart veränderten Schrittwert und dem Anfangsschrittwert des ersten weiteren Netzwerkgeräts 2 von dem Netzwerkgerät 1. Der Abstand hat hier demnach den Wert 1.
- Anzeigen des Abstands zur Ortung des Netzwerkgeräts 1 für einen Benutzer an dem ersten weiteren Netzwerkgerät 2, indem von dem ersten weiteren Netzwerkgerät 2 die LED mit der Anzahl geblinkt wird, die mit dem Abstand korrespondiert. Die LED blinkt demnach periodisch 1 Mal.
- Ersetzen des Schrittwerts durch den veränderten Schrittwert in der Nachricht. Der veränderte Schrittwert in der Nachricht hat demnach den Wert 2
- Erneutes Senden der Nachricht mit dem veränderten Schrittwert in das Mesh-Netzwerk 9.

Im zweiten Ausbreitungsschritt, siehe Fig. 3, übernimmt das erste weitere Netzwerkgerät 2 die zuvor beschriebene Funktion des Netzwerkgeräts 1 und übernehmen das Netzwerkgerät 1 und die weiteren Netzwerkgeräte 3 bis 6 die zuvor beschriebene Funktion des ersten weiteren Netzwerkgerät 2. Dabei wird die Nachricht von dem Netzwerkgerät 1 nicht als zum ersten Mal empfangen eingestuft.

Im dritten Ausbreitungsschritt, siehe Fig. 4, übernehmen die weiteren Netzwerkgeräte 3 bis 6 die zuvor beschriebene Funktion des Netzwerkgeräts 1 und übernehmen die weiteren Netzwerkgeräte 2, 7 und 8 die zuvor beschriebene Funktion des ersten weiteren Netzwerkgeräts 2. Dabei wird die Nachricht von den weiteren Netzwerkgeräten 2, 4 und 6 als nicht als zum ersten Mal empfangen eingestuft.

Nach dem dritten Ausbreitungsschritt zeigen die weiteren Netzwerkgeräte 2 bis 8 die folgenden Abstände in Schrittwerten:

| | |
|---|---|
| - Ersten weiteres Netzwerkgerät 2: | 1 |
| - Zweites weiteres Netzwerkgerät 3: | 2 |
| - Drittes weiteres Netzwerkgerät 4: | 2 |
| - Viertes weiteres Netzwerkgerät 5: | 2 |
| - Fünftes weiteres Netzwerkgerät 6: | 2 |
| - Sechstes weiteres Netzwerkgerät 7: | 3 |
| - Siebtes weiteres Netzwerkgerät 8: | 3 |

Wenn die Position des Benutzers zum Beispiel zwischen dem sechsten weiteren Netzwerkgerät 7 und dem siebten weiteren Netzwerkgerät 8 ist, dann wird er durch die Anzahl des Blinkens der LEDs auf den einzelnen weiteren Netzwerkgeräten 2 bis 8 zum Netzwerkgerät 1 geführt. Zum Beispiel blinkt die LED des siebten weiteren Netzwerkgeräte periodisch 3 Mal.

### Bezugszeichen

- 1: Netzwerkgerät
- 2: erstes weiteres Netzwerkgerät
- 3: zweites weiteres Netzwerkgerät
- 4: drittes weiteres Netzwerkgerät
- 5: viertes weiteres Netzwerkgerät
- 6: fünftes weiteres Netzwerkgerät
- 7: sechstes weiteres Netzwerkgerät
- 8: siebtes weiteres Netzwerkgerät
- 9: Mesh-Netzwerk

## Patentansprüche

1. Verfahren zum Orten eines Netzwerkgeräts (1) in einem Mesh-Netzwerk (9),
wobei das Mesh-Netzwerk (9) durch das Netzwerkgerät (1) und mindestens ein weiteres Netzwerkgerät (2 bis 8) gebildet wird,
**dadurch gekennzeichnet,**
**dass** von dem Netzwerkgerät (1)
- eine Nachricht erzeugt wird,
- in der Nachricht ein Schrittwert und ein Anfangsschrittwert gespeichert werden,
- der Schrittwert mit dem Anfangsschrittwert initialisiert wird und
- die Nachricht dann in das Mesh-Netzwerk (9) gesendet wird,
**dass** von dem mindestens einen weiteren Netzwerkgerät (2 bis 8)
- die Nachricht empfangen wird und
- bestimmt wird, ob die Nachricht als zum ersten Mal empfangen eingestuft wird,
**dass**, nur wenn die Nachricht von dem mindestens einen weiteren Netzwerkgerät (2 bis 8) als zum ersten Mal empfangen eingestuft wird, von dem mindestens einen weiteren Netzwerkgerät (2 bis 8)
- zum Schrittwert ein Deltaschrittwert addiert wird,
- aus dem derart veränderten Schrittwert und dem Anfangsschrittwert ein Abstand des mindestens einen weiteren Netzwerkgeräts (2 bis 8) von dem Netzwerkgerät (1) bestimmt wird und
- der Abstand zur Ortung des Netzwerkgeräts (1) für einen Benutzer an dem mindestens einen weiteren Netzwerkgerät (2 bis 8) angezeigt wird.

2. Verfahren nach Anspruch 1, **dadurch gekennzeichnet, dass**, nur wenn von dem mindestens einen weiteren Netzwerkgerät (2 bis 8) die Nachricht als zum ersten Mal empfangen eingestuft wird, von dem mindesten einen weiteren Netzwerkgerät (2 bis 8) in der Nachricht der Schrittwert durch den veränderten Schrittwert ersetzt und die Nachricht dann erneut in das Mesh-Netzwerk (9) gesendet wird.

3. Verfahren nach Anspruch 1 oder 2, **dadurch gekennzeichnet, dass** bestimmt wird, ob von dem mindestens einen weiteren Netzwerkgerät (2 bis 8) eine Nachricht als zum ersten Mal empfangen eingestuft wird, indem von dem mindestens einen weiteren Netzwerkgerät (2 bis 8) jede empfangene Nachricht mit einem individuellen Index versehen und dieser abgespeichert wird, der Index der Nachricht mit den bereits abgespeicherten Indizes verglichen wird und die Nachricht, nur wenn ihr Index verschieden von den bereits abgespeicherten Indizes ist, als zum ersten Mal empfangen eingestuft wird.

4. Verfahren nach Anspruch 1 oder 2, **dadurch gekennzeichnet, dass** bestimmt wird, ob von dem mindestens einen weiteren Netzwerkgerät (2 bis 8) eine Nachricht als zum ersten Mal empfangen eingestuft wird, indem von dem mindestens einen weiteren Netzwerkgerät (2 bis 8) empfangene Nachrichten abgespeichert werden, die Nachricht mit den bereits abgespeicherten Nachrichten verglichen wird und die Nachricht, nur wenn sie verschieden von den bereits abgespeicherten Nachrichten ist, als zum ersten Mal empfangen eingestuft wird.

5. Verfahren nach einem der Ansprüche 1 bis 4, **dadurch gekennzeichnet, dass** der Deltaschrittwert den Betrag 1 hat, vorzugsweise den Wert 1 hat und vorzugsweise der Anfangsschrittwert den Wert 0 hat.

6. Verfahren nach einem der Ansprüche 1 bis 5, **dadurch gekennzeichnet, dass** von dem mindestens einen weiteren Netzwerkgerät (2 bis 8) bestimmt wird, ob der Schrittwert einen Endschrittwert erreicht hat, dass, nur wenn der Schrittwert den Endschrittwert noch nicht erreicht hat, von dem mindestens einen weiteren Netzwerkgerät (2 bis 8) die Nachricht erneut in das Mesh-Netzwerk (9) gesendet wird, und dass vorzugsweise von dem Netzwerkgerät (1) der Endschrittwert in der Nachricht gespeichert wird.

7. Verfahren nach einem der Ansprüche 1 bis 6, **dadurch gekennzeichnet, dass** von dem Netzwerkgerät (1) in der Nachricht eine Kennung des mindestens einen weiteren Netzwerkgeräts abgespeichert wird, dass von dem mindestens einen weiteren Netzwerkgerät (2 bis 8) die Kennung abgespeichert wird, dass von dem mindesten einen weiteren Netzwerkgerät (2 bis 8) bestimmt wird, ob die Kennung in der Nachricht mit der eigenen Kennung identisch ist, dass, wenn die Kennung in der Nachricht nicht mit der eigenen Kennung identisch ist, von dem mindestens einen weiteren Netzwerkgerät (2 bis 8) die Nachricht als nicht zum ersten Mal empfangen eingestuft wird.

8. Verfahren nach Anspruch 7, **dadurch gekennzeichnet dass**, nur wenn die Kennung in der Nachricht mit der eigenen Kennung identisch ist, von dem mindestens einen weiteren Netzwerkgerät (2 bis 8) die Nachricht erneut in das Mesh-Netzwerk (9) gesendet wird.

9. Verfahren nach einem der Ansprüche 1 bis 8, wobei das mindestens eine weitere Netzwerkgerät (2 bis 8) eine Blinkleuchte, vorzugsweise eine LED, aufweist und zum Blinken der Blinkleuchte ausgebildet ist, **dadurch gekennzeichnet, dass** der Abstand angezeigt wird, indem von dem mindestens einen weiteren Netzwerkgerät (2 bis 8) die Blinkleuchte mit einer Anzahl geblinkt wird, die mit dem Abstand korrespondiert.

10. Verfahren nach einem der Ansprüche 1 bis 9, **dadurch gekennzeichnet, dass** von dem Netzwerkgerät (1) in der Nachricht eine Fehlermeldung abgespeichert wird und/oder dass von dem mindestens einen weiteren Netzwerkgerät (2 bis 8) bestimmt wird, ob in der Nachricht eine Fehlermeldung abgespeichert ist, und dass, nur wenn eine Fehlermeldung in der Nachricht abgespeichert ist, von dem mindestens einen weiteren Netzwerkgerät (2 bis 8) der Abstand angezeigt wird.

11. Verfahren nach einem der Ansprüche 1 bis 10, **dadurch gekennzeichnet, dass** von dem mindestens einen weiteren Netzwerkgerät (2 bis 8),
- wenn die Nachricht empfangen wird, ein Zeitmesser gestartet wird,
- falls eine weitere vom Netzwerkgerät gesendete Nachricht empfangen wird, der Zeitmesser zurückgesetzt und neu gestartet wird,
- ein Vergleich eines Zeitwerts des Zeitmessers mit einem Referenzzeitwert durchgeführt wird und,
- wenn der Vergleich einen Zeitwert größer als den Referenzzeitwert ergibt, die Nachricht als zum ersten Mal empfangen eingestuft wird.

12. Mesh-Netzwerk (9) mit einem Netzwerkgerät (1) und mindestens einem weiteren Netzwerkgerät (2 bis 8),
**dadurch gekennzeichnet,**
**dass** das Netzwerkgerät (1) ausgebildet ist,
- eine Nachricht zu erzeugen,
- in der Nachricht einen Schrittwert und einen Anfangsschrittwert zu speichem,
- den Schrittwert mit dem Anfangsschrittwert zu initialisieren und
- die Nachricht dann in das Mesh-Netzwerk (9) zu senden,
**dass** das mindestens eine weiteren Netzwerkgerät (2 bis 8) ausgebildet ist,
- die Nachricht zu empfangen und
- zu bestimmen, ob die Nachricht als zum ersten Mal empfangen eingestuft ist,
**dass** das mindestens eine weitere Netzwerkgerät (2 bis 8) ausgebildet ist, nur wenn die Nachricht von dem mindestens einen weiteren Netzwerkgerät (2 bis 8) als zum ersten Mal empfangen eingestuft ist,
- zum Schrittwert einen Deltaschrittwert zu addieren,
- aus dem derart veränderten Schrittwert und dem Anfangsschrittwert einen Abstand des mindestens einen weiteren Netzwerkgeräts (2 bis 8) von dem Netzwerkgerät (1) zu bestimmen und
- den Abstand zur Ortung des Netzwerkgeräts (1) für einen Benutzer an dem mindestens einen weiteren Netzwerkgerät (2 bis 8) anzuzeigen.

13. Mesh-Netzwerk (9) nach Anspruch 12, **dadurch gekennzeichnet, dass** das Netzwerkgerät (1) zusätzlich wie das mindestens eine weitere Netzwerkgerät (2 bis 8) und/oder das mindestens eine weitere Netzwerkgerät (2 bis 8) zusätzlich wie das Netzwerkgerät (1) ausgebildet ist.

14. Mesh-Netzwerk (9) nach Anspruch 12 oder 13, **dadurch gekennzeichnet, dass** die Netzwerkgeräte (1 bis 8) als Feldgeräte ausgebildet sind.

15. Mesh-Netzwerk (9) nach einem der Ansprüche 12 bis 14, **dadurch gekennzeichnet, dass** das Netzwerkgerät (1) und/oder das mindestens eine weitere Netzwerkgerät (2 bis 8) zur Ausführung des Verfahrens nach einem Ansprüche 2 bis 9 ausgebildet sind bzw. ist.

## Claims

1. Method for locating a network device (1) in a mesh network (9), wherein the mesh network (9) is formed by the network device (1) and at least one further network device (2 to 8),
**characterized in**
**that** from the network device (1)
- a message is generated
- a step value and an initial step value are stored in the message,
- the step value is initialized with the initial step value, and
- the message is then sent to the mesh network (9),
**that** from the at least one further network device (2 to 8)
- the message is received and
- it is determined whether the message is classified as received for the first time,
**that**, only if the message is classified by the at least one further network device (2 to 8) as being received for the first time, from the at least one further network device (2 to 8)
- a delta step value is added to the step value,
- a distance of the at least one further network device (2 to 8) from the network device (1) is determined from the step value changed in this way and the initial step value, and
- the distance for locating the network device (1) is indicated for a user at the at least one further network device (2 to 8).

2. Method according to claim 1, **characterized in that**, only if the message is classified as received for the first time from the at least one further network device (2 to 8), is the step value replaced by the changed step value in the message from the at least one further network device (2 to 8) and is the message then sent again into the mesh network (9).

3. Method according to claim 1 or 2, **characterized in that** it is determined whether a message is classified as received for the first time by the at least one further network device (2 to 8) by providing each received message with an individual index by the at least one further network device (2 to 8) and storing this index, comparing the index of the message with the already stored indices and classifying the message as received for the first time only if its index is different from the already stored indices.

4. Method according to claim 1 or 2, **characterized in that** it is determined whether a message is classified as received for the first time by the at least one further network device (2 to 8) by storing messages received by the at least one further network device (2 to 8), comparing the message with the already stored messages and classifying the message as received for the first time only if it is different from the already stored messages.

5. Method according to any one of claims 1 to 4, **characterized in that** the delta step value has the absolute value 1, preferably the value 1, and preferably the initial step value has the value 0.

6. Method according to any one of claims 1 to 5, **characterized in that** it is determined by the at least one further network device (2 to 8) whether the step value has reached a final step value, that, only if the step value has not yet reached the final step value, is the message retransmitted into the mesh network (9) by the at least one further network device (2 to 8), and that preferably the network device (1) stores the final step value in the message.

7. Method according to any one of claims 1 to 6, **characterized in that** an identifier of the at least one further network device (2 to 8) is stored in the message by the network device (1), that the identifier is stored by the at least one further network device (2 to 8), that the at least one further network device (2 to 8) determines whether the identifier in the message is identical to its own identifier, that, if the identifier in the message is not identical to its own identifier, the at least one further network device (2 to 8) classifies the message as not being received for the first time.

8. Method according to claim 7, **characterized in that**, only if the identifier in the message is identical to the own identifier, is the message retransmitted into the mesh network (9) by the at least one further network device (2 to 8).

9. Method according to any one of claims 1 to 8, wherein the at least one further network device (2 to 8) has a flashing light, preferably an LED, and is designed to flash the flashing light, **characterized in that** the distance is shown **in that** the at least one further network device (2 to 8) flashes the flashing light with a number corresponding to the distance.

10. Method according to any one of the claims 1 to 9, **characterized in that** an error message is stored in the message by the network device (1) and/or that it is determined by the at least one further network device (2 to 8) whether an error message is stored in the message, and that, only if an error message is stored in the message, is the distance indicated by the at least one further network device (2 to 8).

11. Method according to any one of claims 1 to 10, **characterized in that** from the at least one further network device (2 to 8),
- if the message is received, a timer is started,
- if a further message sent by the network device is received, the timer is reset and restarted,
- a comparison of a time value of the timer with a reference time value is performed, and,
- if the comparison results in a time value greater than the reference time value, the message is classified as received for the first time.

12. Mesh network (9) comprising a network device (1) and at least one further network device (2 to 8),
**characterized in**
**that** the network device (1) is designed
- to generate a message,
- to store a step value and an initial step value in the message,
- to initialize the step value with the initial step value, and
- then to transmit the message into the mesh network (9),
**that** the at least one further network device (2 to 8) is adapted
- to receive the message and
- to determine whether the message is classified as received for the first time,
**that** the at least one further network device (2 to 8) is adapted, only if the message is classified by the at least one further network device (2 to 8) as having been received for the first time,
- to add a delta step value to the step value,
- to determine a distance of the at least one further network device (2 to 8) from the network device (1) from the step value changed in this way and the initial step value, and
- to indicate the distance for locating the network device (1) to a user at the at least one further network device (2 to 8).

13. Mesh network (9) according to claim 12, **characterized in that** the network device (1) is additionally designed like the at least one further network device (2 to 8) and/or the at least one further network device (2 to 8) is additionally designed like the network device (1).

14. Mesh network (9) according to claim 12 or 13, **characterized in that** the network devices (1 to 8) are designed as field devices.

15. Mesh network (9) according to any one of claims 12 to 14, **characterized in that** the network device (1) and/or the at least one further network device (2 to 8) is/are designed to carry out the method according to any one of claims 2 to 9.

## Revendications

1. Procédé de localisation d'un périphérique de réseau (1) dans un réseau maillé (9),
le réseau maillé (9) étant formé par le périphérique de réseau (1) et au moins un périphérique de réseau supplémentaire (2 à 8),
**caractérisé en ce**
**que** le périphérique de réseau (1)
- génère un message,
- mémorise dans le message une valeur de pas et une valeur de pas initiale,
- initialise la valeur de pas avec la valeur de pas initiale et
- envoie ensuite le message dans le réseau maillé (9),
**que** l'au moins un périphérique de réseau supplémentaire (2 à 8)
- reçoit le message et
- détermine si le message est classifié comme étant reçu pour la première fois,
**que** seulement si le message est classifié par l'au moins un périphérique de réseau supplémentaire (2 à 8) comme étant reçu pour la première fois, l'au moins un périphérique de réseau supplémentaire (2 à 8)
- additionne une valeur de pas delta à la valeur de pas,
- détermine, à partir de la valeur de pas ainsi modifiée et de la valeur de pas initiale, un écart entre l'au moins un périphérique de réseau supplémentaire (2 à 8) et le périphérique de réseau (1) et
- indique l'écart en vue de localiser le périphérique de réseau (1) pour un utilisateur au niveau de l'au moins un périphérique de réseau supplémentaire (2 à 8).

2. Procédé selon la revendication 1, **caractérisé en ce que** seulement si le message est classifié par l'au moins un périphérique de réseau supplémentaire (2 à 8) comme étant reçu pour la première fois, l'au moins un périphérique de réseau supplémentaire (2 à 8) remplace la valeur du pas dans le message par la valeur de pas modifiée et envoie une nouvelle fois le message dans le réseau maillé (9).

3. Procédé selon la revendication 1 ou 2, **caractérisé en ce qu'**il est déterminé si un message est classifié par l'au moins un périphérique de réseau supplémentaire (2 à 8) comme étant reçu pour la première fois par le fait que l'au moins un périphérique de réseau supplémentaire (2 à 8) munit chaque message reçu d'un indice individuel et mémorise celui-ci, compare l'indice du message avec les indices déjà mémorisés et ne classifie le message comme étant reçu pour la première fois que si son indice est différent des indices déjà mémorisés.

4. Procédé selon la revendication 1 ou 2, **caractérisé en ce qu'**il est déterminé si un message est classifié par l'au moins un périphérique de réseau supplémentaire (2 à 8) comme étant reçu pour la première fois par le fait que l'au moins un périphérique de réseau supplémentaire (2 à 8) mémorise les messages reçus, compare le message avec les messages déjà mémorisés et ne classifie le message comme étant reçu pour la première fois que s'il est différent des messages déjà mémorisés.

5. Procédé selon l'une des revendications 1 à 4, **caractérisé en ce que** la valeur de pas delta a pour montant 1, a de préférence la valeur 1 et la valeur de pas initiale a de préférence la valeur 0.

6. Procédé selon l'une des revendications 1 à 5, **caractérisé en ce que** l'au moins un périphérique de réseau supplémentaire (2 à 8) détermine si la valeur de pas a atteint une valeur de pas finale, **en ce que** le message est une nouvelle fois envoyé dans le réseau maillé (9) par l'au moins un périphérique de réseau supplémentaire (2 à 8) que si la valeur de pas n'a pas encore atteint la valeur de pas finale, et **en ce que** la valeur de pas finale est de préférence mémorisée dans le message par le périphérique de réseau (1).

7. Procédé selon l'une des revendications 1 à 6, **caractérisé en ce que** le périphérique de réseau (1) mémorisé dans le message un identifiant de l'au moins un périphérique de réseau supplémentaire, **en ce que** l'identifiant est mémorisé par l'au moins un périphérique de réseau supplémentaire (2 à 8), **en ce que** l'au moins un périphérique de réseau supplémentaire (2 à 8) détermine si l'identifiant dans le message est identique à l'identifiant propre, **en ce que** lorsque l'identifiant dans le message est identique à l'identifiant propre, le message est classifié par l'au moins un périphérique de réseau supplémentaire (2 à 8) comme non reçu pour la première fois.

8. Procédé selon la revendication 7, **caractérisé en ce que** le message est une nouvelle fois envoyé dans le réseau maillé (9) par l'au moins un périphérique de réseau supplémentaire (2 à 8) que si l'identifiant dans le message est identique à l'identifiant propre.

9. Procédé selon l'une des revendications 1 à 8, l'au moins un périphérique de réseau supplémentaire (2 à 8) possédant un témoin lumineux clignotant, de préférence une LED, et étant configuré pour faire clignoter le témoin lumineux clignotant, **caractérisé en ce que** l'écart est indiqué par le fait que l'au moins un périphérique de réseau supplémentaire (2 à 8) fait clignoter le témoin lumineux clignotant un nombre de fois qui correspond à l'écart.

10. Procédé selon l'une des revendications 1 à 9, **caractérisé en ce que** le périphérique de réseau (1) mémorise dans le message un message d'erreur et/ou **en ce que** l'au moins un périphérique de réseau supplémentaire (2 à 8) détermine si un message d'erreur est mémorisé dans le message et **en ce que** l'écart est indiqué par l'au moins un périphérique de réseau supplémentaire (2 à 8) seulement si un message d'erreur est mémorisé dans le message.

11. Procédé selon l'une des revendications 1 à 10, **caractérisé en ce que** l'au moins un périphérique de réseau supplémentaire (2 à 8),
- démarre un chronomètre lorsque le message est reçu,
- remet à zéro et redémarre le chronomètre dans le cas où un message supplémentaire émis par le périphérique de réseau est reçu,
- effectue une comparaison entre une valeur de temps du chronomètre et une valeur de référence et
- lorsque la comparaison résulte en une valeur de temps supérieure à la valeur de référence, classifie le message comme étant reçu pour la première fois.

12. Réseau maillé (9) comprenant un périphérique de réseau (1) et au moins un périphérique de réseau supplémentaire (2 à 8),
**caractérisé en ce**
**que** le périphérique de réseau (1) est configuré pour
- générer un message,
- mémoriser dans le message une valeur de pas et une valeur de pas initiale,
- initialiser la valeur de pas avec la valeur de pas initiale et
- envoyer ensuite le message dans le réseau maillé (9) ,
**que** l'au moins un périphérique de réseau supplémentaire (2 à 8) est configuré pour
- recevoir le message et
- déterminer si le message est classifié comme étant reçu pour la première fois,
**que** l'au moins un périphérique de réseau supplémentaire (2 à 8) est configuré pour, seulement si le message est classifié par l'au moins un périphérique de réseau supplémentaire (2 à 8) comme étant reçu pour la première fois,
- additionner une valeur de pas delta à la valeur de pas,
- déterminer, à partir de la valeur de pas ainsi modifiée et de la valeur de pas initiale, un écart entre l'au moins un périphérique de réseau supplémentaire (2 à 8) et le périphérique de réseau (1) et
- indiquer l'écart en vue de localiser le périphérique de réseau (1) pour un utilisateur au niveau de l'au moins un périphérique de réseau supplémentaire (2 à 8).

13. Réseau maillé (9) selon la revendication 12, **caractérisé en ce que** le périphérique de réseau (1) est en plus configuré comme l'au moins un périphérique de réseau supplémentaire (2 à 8) et/ou l'au moins un périphérique de réseau supplémentaire (2 à 8) en plus comme le périphérique de réseau (1).

14. Réseau maillé (9) selon la revendication 12 ou 13, **caractérisé en ce que** les périphériques de réseau (1 à 8) sont réalisés sous la forme d'appareils de terrain.

15. Réseau maillé (9) selon l'une des revendications 12 à 14, **caractérisé en ce que** le périphérique de réseau (1) et/ou l'au moins un périphérique de réseau supplémentaire (2 à 8) sont ou est configuré pour mettre en œuvre le procédé selon l'une des revendications 2 à 9.
